# EUROPEAN PATENT SPECIFICATION

(11) **EP 2 453 510 B1**
(45) Date of publication and mention of the grant of the patent: **20.03.2013**
(21) Application number: 10190600.6
(22) Date of filing: 10.11.2010
(51) Int. Cl.: H01M 8/24, H01M 8/04, H01M 8/00

(54) **Fuel tank located within a frame of an electronic portable device**
In einem Rahmen einer tragbaren elektronischen Vorrichtung platzierter Brennstofftank
Réservoir de carburant situé dans un cadre de dispositif électronique portable

(43) Date of publication of application: 16.05.2012
(73) Proprietor: Research In Motion Limited, Waterloo, ON N2L 3W8 (CA)
(72) Inventor: Rich, David Gerard, Waterloo Ontario N2L 5R9 (CA); Winger, Lyall Kenneth, Waterloo Ontario N2L 5R9 (CA); Wu, Chee-Ming Jimmy, Waterloo Ontario N2L 5R9 (CA)
(74) Representative: Moore, Barry

(56) References cited:
- WO-A1-2010/001981
- US-A1- 2003 232 229
- US-A1- 2009 081 523
- US-A1- 2010 035 102

## Description

Embodiments herein relate generally to the field of fuel tanks for fuel cells. More specifically, the embodiments herein relate to fuel tanks for electronic portable devices having a fuel cell. The fuel tanks are provided within a body that stores fuel and which also defines a frame for the electronic portable device.

Fuel cells have received significant attention in recent years for their potential benefits for electricity generation with relatively low environmental impact. The basic principles of fuel cells have been understood for a long time, but they have seen little widespread use due to their comparatively high cost of production and the difficulty in managing their operation.

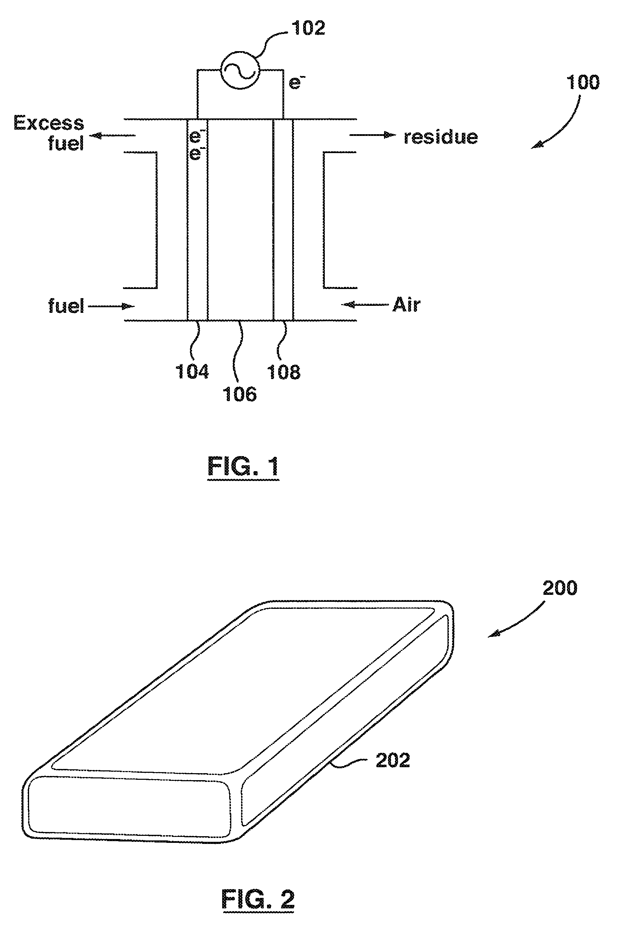

An exemplary arrangement of a fuel cell is schematically depicted in Figure 1. Generally, a fuel cell is an electrochemical conversion device that produces electricity from a reaction between a fuel and an oxidant in the presence of an electrolyte. In operation, the fuel and the oxidant flow into the fuel cell, thereby producing electricity, and a residue that flows out. For example, in the case of a hydrogen fuel cell, hydrogen is used as the fuel and oxygen (or air) is used as the oxidant, while water is produced as a residue (either liquid or gaseous).

Unlike batteries that chemically store electrical energy, fuel cells consume reactants to produce electrical energy, thus requiring replenishment to maintain the reaction. Therefore, a fuel cell is normally accompanied by a fuel tank to store and provide fuel as needed.

Electronic portable devices usually include many components and available space is often scarce. Adding a fuel cell and a fuel tank to an electronic portable device is often therefore problematic.

U.S. Published Patent Application No. 2010/035102 discloses a fuel cell system for a portable electronic device including one or more fuel storage components, adapted to store and deliver a fuel, one or more electronic components and one or more fuel cells in contact with at least one of the one or more fuel storage components and one or more electronic components. The one or more fuel storage components are adapted to provide a secondary function, in addition to storing and delivering fuel.

### GENERAL

Some embodiments herein relate generally to a fuel tank for a fuel cell, and more particularly to a fuel tank for a fuel cell located within a frame for an electronic portable device (in that most or all of the fuel tank is generally inside the contours of the frame) according to claim 1. The fuel tank of the electronic portable device may be located in a body that is sized and shaped for storing fuel therein and which defines the frame of the electronic portable device. An inlet may be located in the fuel tank for introducing fuel into the fuel tank, and an outlet is located in the fuel tank for releasing the fuel from the fuel tank.

In accordance with some embodiments, an electronic portable device may comprise at least one electronic component, at least one fuel tank, and at least one fuel cell. More particularly, the fuel tank may be located within a body that also defines a frame for the electronic portable device. The electronic portable device may also comprise an inlet for introducing fuel into the body of the fuel tank, and an outlet for releasing the fuel from the fuel tank. The fuel cell may be operable to receive the fuel and produce electrical power for powering (at least in part) the at least one electronic component.

### BRIEF DESCRIPTION OF THE DRAWINGS

Figure 1 is a schematic view of an arrangement of a fuel cell adapted to provide electrical power to an electrical load.

Figure 2 is a schematic perspective view of a fuel tank for an electronic portable device in accordance with some embodiments.

Figure 3 is a schematic view of a fuel tank for an electronic portable device in accordance with other embodiments.

Figure 4 is a schematic view of aspects of the fuel tank of Figure 3.

Figure 5 is a schematic view of a cross-section of the fuel tank of Figure 3.

Figure 6 is an exploded schematic view of an electronic portable device in accordance with another embodiment.

Figure 7 is another schematic view of a cross-section of a frame having a hollow region for storing fuel therein.

Figure 8 is a schematic view of a cross-section of a frame having a fuel cell therein.

Figure 9 is a schematic view of a cross-section of a frame having a fuel cell and a fuel tank therein.

### DETAILED DESCRIPTION

Illustrated for example in Figure 1 is a fuel cell 100 coupled to an electric load 102, which may be representative of one or more components of any number of electronic portable devices, such as a mobile phone, a smart phone, a personal digital assistant, a portable video game console, a tablet computer, a media player, and so on. As shown, the fuel cell 100 generally includes an anode 104, an electrolyte 106, and a cathode 108.

As will be discussed below, the electronic portable device includes one or more electronic components, with at least one of the electronic components being powered (at least in part) by the fuel cell 100.

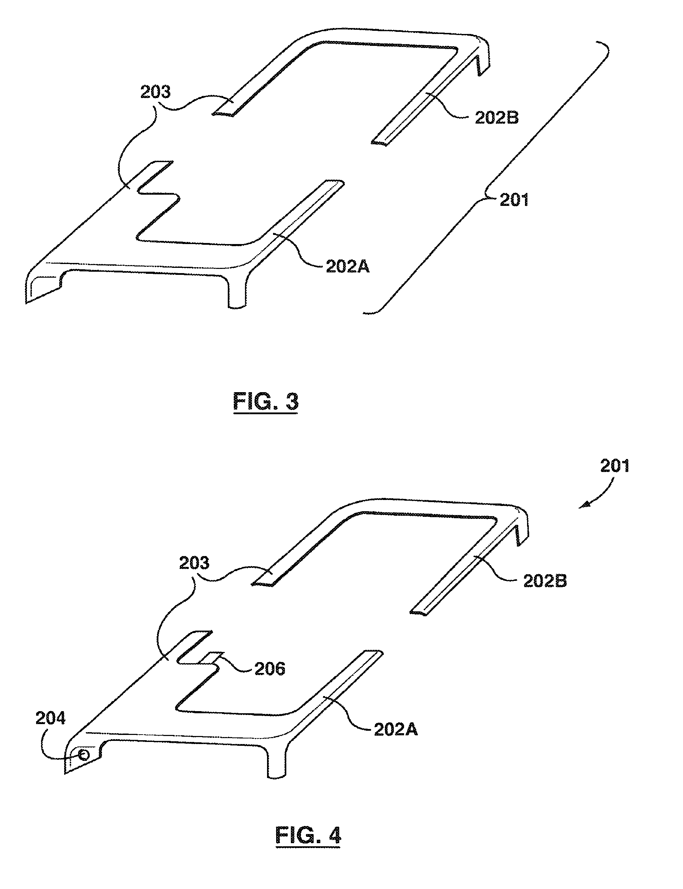

Reference is now made concurrently to Figures 2 and 3, which depict schematic perspective views of fuel tanks 200, 201 for an electronic portable device in accordance with some embodiments.

In Figure 2, a first fuel tank 200 is located within a unitary body 202 (e.g. as one continuous piece). The unitary body 202 is sized and shaped to store fuel for the fuel tank and also define the frame of an electronic portable device. For example, one or more electronic components (e.g. a processor, memory, display, etc.) may be embedded in or affixed to the unitary body 202.

In some embodiments, a casing (not shown) may be affixed to the unitary body 202.

Figure 3 on the other hand depicts a modular fuel tank 201. The modular fuel tank 201 is composed of multiple body sections, including a first body section 202A and a second body section 202B. When interlocked, the first body section 202A and second body section 202B cooperate so as to define the fuel tank 201.

In particular, each body section (e.g. the first body section 202A) is adapted to fixedly and securely couple to another body section (e.g. the second body section 202B), for example using mechanical interlocking couplers. The fuel tank 201 may be of various shapes and sizes according to the desired size and shape of a particular electronic portable device.

Although Figure 3 depicts only two body sections (e.g. body sections 202A and 202B), it will be appreciated that various quantities of body sections could be coupled together to form the modular fuel tank 201.

As shown, the body sections 202A, 202B of the fuel tank 201 generally serves a dual purpose. First, the body sections 202A, 202B will include at least one hollow region that provides storage for fuel to be used by a fuel cell (and thus serve as a fuel storage device or fuel tank 201). The body sections 202A, 202B are further shaped so as to define the frame 203 for the electronic device (and thus provides structural rigidity for the electronic device).

In some embodiments, as different types of fuel cells using different fuels may be used with various electronic portable devices, the body sections 202A, 202B may store particular types of fuel to be used by a particular fuel cell connected to the fuel tank 201. Examples of fuel may include H₂, methanol, or other types of fuel in liquid, gaseous or hybrid forms.

The body sections 202A, 202B may be adapted for securing electronic components therein.

The body sections 202A, 202B generally protect the electronic components from external impact that could damage the components. In some embodiments, the body sections 202A, 202B of the fuel tank 200 may be made from a material that is rigid enough to support the electronic components and to absorb impact (e.g. a rigid plastic such as ABS, or other materials as will be discussed below).

In some embodiments, the body sections 202A, 202B may have or form a ridge positioned along a periphery of the electronic portable device for clipping a casing thereto or for aligning two portions of the casing therewith.

Turning now to Figure 4, another schematic view of the fuel tank 201 comprising the first and second body sections 202A and 202B is depicted. Although Figure 4 shows the modular fuel tank 201, the following description generally equally applies to both modular fuel tanks and to fuel tanks manufactured as a unitary body (e.g. fuel tank 200 as shown in Figure 2).

The body sections 202A and 202B of the fuel tank 201 are generally adapted to store fuel to be used by one or a plurality of fuel cells.

In some embodiments, the body sections 202A, 202B may be sized and shaped to include one or more fuel cells therein.

In some embodiments, the body sections 202A, 202B may be sized and shaped to have one or more residue tanks therein.

In yet other embodiments, the body sections 202A, 202B may be sized and shaped to include a combination of various quantifies of fuel tanks, fuel cells and residue tanks therein.

Generally, the number, size, and shape of the body sections 202A and 202B may depend on various factors, such as the available space within an electronic portable device, the desired amount of fuel to be stored, the operating parameters of the fuel tank and the electronic portable device, the desired access between the fuel tank and a particular fuel cell, the efficiency of fuel distribution, and so on.

As shown in Figure 4, at least one of the body sections (e.g. the first body section 202A) may include an inlet 204 for introducing fuel therein. The inlet 204 could be adapted to connect to a fueling dock (not shown) for refueling the fuel tank 201. The inlet 204 could also be adapted to connect to a fueling pipe transporting the fuel from a fuel reservoir (not shown), which could be separate from the portable electronic device.

In some embodiments, the inlet 204 could include a female adaptor operable to receive a male adaptor of a fueling pipe or a fueling dock, or vice versa.

In some embodiments, the inlet 204 could include a one-way check valve that allows fuel to pass through the inlet 204 into the fuel tank 201, but inhibits fuel from leaking out of the fuel tank 201.

In some embodiments, such as where each body section 202A, 202B is independent from the other (i.e. not in fluid coupling with each other), each body section 202A, 202B may include its own inlet 204 for receiving fuel.

At least one of the body sections (e.g. the first body section 202A) also includes an outlet 206 for releasing fuel from the fuel tank 201.

In some embodiments, the outlet 206 may be adapted for connecting to a fuel channel, which may be in fluid communication with a fuel cell 210 (or in some cases to another fuel tank, which could be on the portable electronic device). In some embodiments (for example, when the body sections 202A, 202B are independent, i.e. not in fluid communication with each other), each body section 202A, 202B may have its own outlet 206 for releasing fuel.

In various embodiments, the fuels used in the fuel tanks may have operating temperature ranges that are different from the operating temperature ranges of the electronic portable device.

For example, some fuels used in some fuel cells can only be released within a limited temperature range that is more limited than the operating temperature range of the electronic device. In such embodiments, the operating range of the fuel tank 201 may be broadened by covering at least a portion of the exterior of the body sections 202A, 202B (e.g. the frame 203) with insulation so as to isolate the fuel in the fuel tank from the temperatures of the electronic portable device.

In some embodiments, releasing fuel from the body sections 202A, 202B may be an exothermic reaction. In some cases, this may release more heat than may be desirable to the electronic components in the electronic portable device. For such embodiments, the body sections 202A, 202B (e.g. frame 203) may also be at least partially covered with an insulation layer, a temperature-controlling sheath, or some other cooling apparatus that can limit the amount of heat released from the body sections 202A, 202B to other electronic components in the electronic portable device.

Similarly, for an endothermically-released fuel, the body sections 202A, 202B (e.g. frame 203) may be at least partially covered by insulation or a heating sheath, for example, which may be useful to control steady-state gas pressures and rates of fuel released from the fuel tank. This may be particularly useful for example when the fuels are hydrides.

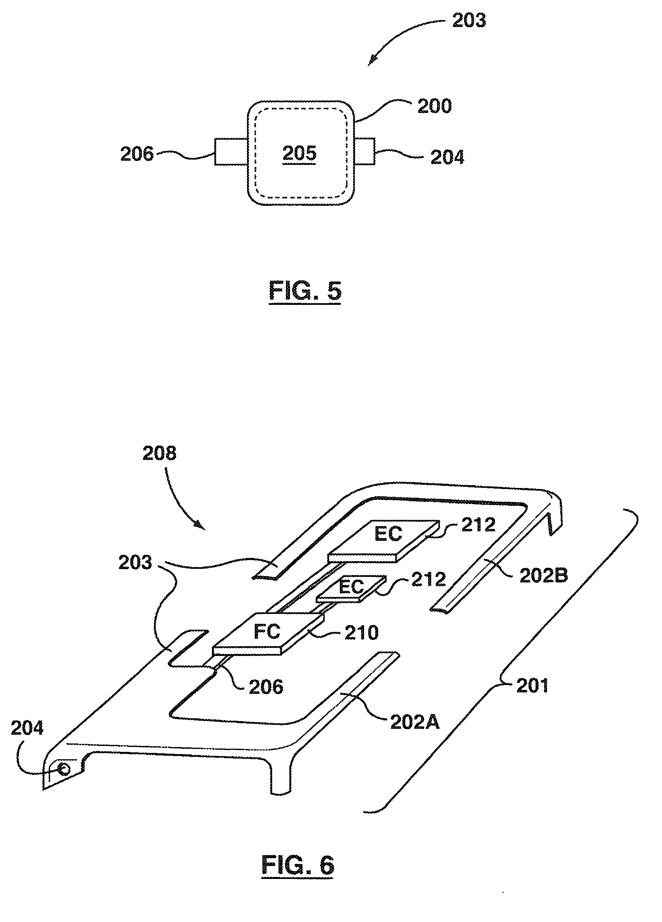

Reference is now made to Figure 5, which depicts a schematic view of a cross-section of the body sections 202A, 202B (e.g. frame 203) according to some embodiments. As shown, in this embodiment, the frame 203 has a square shaped cross-section with rounded corners. In other embodiments, the frame 203 may have other cross-sectional shapes, such as rectangular, oval, round, or other shapes.

As shown, the frame 203 includes at least one hollow region 205 (which defines the fuel tank 201) for storing fuel therein. In Figure 5, the hollow region 205 is generally centrally located within the cross-section of the frame 203. In other embodiments, the hollow region 205 may be located at other positions within the frame 203 (e.g. the hollow region 205 may be offset from the central region of the body).

In some embodiments, to add strength to the frame 203, the walls of the body sections 202A, 202B may be reinforced, for example using an impact resistant material. Such reinforcement may stiffen the body sections 202A, 202B and may assist with protecting the fuel stored within the hollow region 205.

Reference is now made to Figure 6, which is a schematic view of an electronic portable device 208 according to some embodiments. As shown, the electronic portable device 208 includes the modular fuel tank 201 formed of two body sections 202A and 202B. The electronic portable device 208 also includes a fuel cell 210 (which is separate from the body section 202A, 202B), and one or more electronic components 212 (e.g. a processor, a memory, a display, and so on).

In some embodiments, the electronic portable device 208 may further include additional components, such as another power source (e.g. a battery, a supercapacitor, etc.), an antenna, a power bus, a casing, and other components to allow proper functioning of the device 208.

Generally, the fuel cell 210 may be any type of fuel cell that is suitable for operating in a small portable electronic device (as opposed to large industrial fuel cells or fuel cells used in vehicles, for example, which can be significantly larger and experience very different operating conditions). In particular, temperature considerations and residue management may be particularly important, since the portable electronic device may be used in close proximity to a person (e.g. may be carried in their pocket or held in a user's hand).

In some embodiments, suitable fuel cells 210 could be a proton exchange membrane fuel cell, a direct methanol fuel cell, an alkaline fuel cell or a solid oxide fuel cell.

The fuel cell 210 is generally adapted for receiving the fuel either directly from the fuel tank 202 or through a fuel channel 206. Upon receipt of the fuel, the fuel cell 210 produces electrical power for powering (at least in part) one or more of the electronic components 212.

Generally, the electronic components 212 may be any electronic component used with the electronic portable device 208, such as a display screen, a keyboard, a mouse, a microprocessor, a codec, a memory, a USB card driver, a radio transceiver, and so on. The various electronic components 212 may be independently connected, or one or more of the electronic components 212 may be connected to a power bus (not shown).

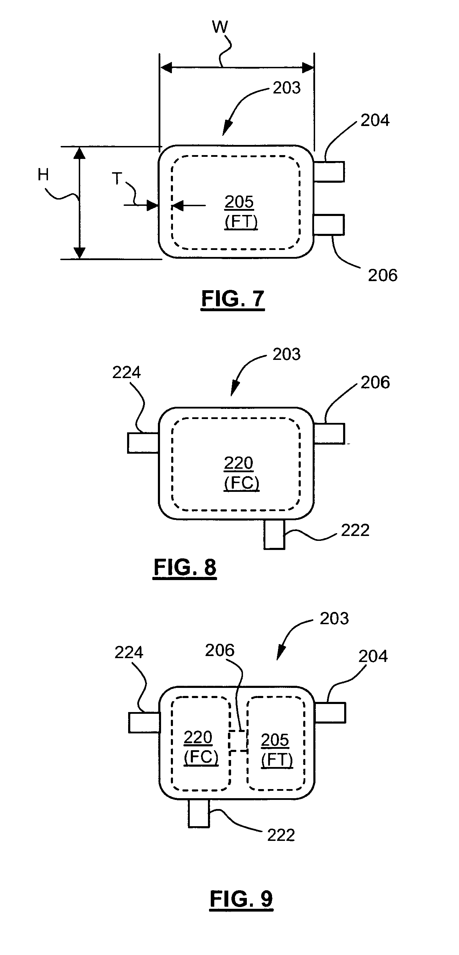

Turning now to Figure 7, as shown in some embodiments one or more portions of the frame 203 include the hollow portion 205 that defines the fuel tank 201 therein. In various embodiments, the thickness T of the walls of the frame 203 can be selected according to the size and shape of the portable electronic device. For example, in some embodiments, the thickness T may be between 1/64 of an inch and 1/8 of an inch. In some embodiments, the thickness T may be between 1/32 of an inch and 1/16 of an inch. In some embodiments the thickness may be less than 1/8 of an inch.

Similarly, the cross-sectional height H of the frame 203 may also be selected according to the size and shape of the portable electronic device. For example, in some embodiments, the height H of the frame 203 may be less than one inch. In other embodiments, the height H may be less than 0.75 inches. In other embodiments, the height H may be less than 0.5 inches. In yet other embodiments, the height H may be less than 0.25 inches.

Furthermore, the cross-sectional width W of the frame 203 may also be selected according to the size and shape of the portable electronic device. In some embodiments, the width W of the frame 203 may be less than two inches. In other embodiments, the width W may be less than 1 inch. In other embodiments, the width W may be less than 0.5 inches.

In some embodiments, the volume of the hollow region 205 within the frame 203 may be selected to be as large as possible to accommodate as much fuel as possible within the portable electronic device. For example, in some embodiments, the hollow region 205 may have a total volume of between 4 cubic inches and 1 cubic inch. In other embodiments, the hollow region 205 may have a total volume of less than 1 cubic inch. In yet other embodiments, the hollow region 205 may have a volume greater than 4 cubic inches.

Turning now to Figure 8, in some in some embodiments one or more portions of the frame 203 may include one or more fuel cells 220 therein. As shown, the fuel cell 220 may be coupled to the outlet 206 of the fuel tank for receiving fuel therefrom, may have a drain 222 for draining residue from the fuel cell, and at least one electrical connector 224 for coupling to and sending electrical power to the electronic components 212.

Turning now to Figure 9, in some embodiments one or more portions of the frame 203 may include both a fuel tank and a fuel cell therein. In particular, the hollow region 205 of the frame 203 may serve as a fuel tank, while the frame 203 also includes the fuel cell 220 therein. The fuel cell 220 can receive fuel via the outlet 206, use the drain 222 to remove residue, and send power to one or more electronic components 212 via at least one electrical connector 224.

In some embodiments, various materials and combinations of materials may be used to make some or all of the components as described herein. For example, at least a portion of the frame 203 may be made of one or more materials such as polymers (including thermoplastics and thermosets, ABS, rubbers, silicone, etc.), metals (such as aluminum, magnesium, etc.), ceramics, composites (e.g. carbon fiber, Kevlar, etc.), and so on.

In some embodiments, combinations of material may be used to provide desired aspects such as structural rigidity, toughness, reactivity, and so on. For example, metal components may be covered by one or more polymer components so as to inhibit contact between the metal components and the fuel in the fuel tanks or fuel cells (or both), which could be undesirable as certain fuels may react with certain metals.

In some embodiments, the size and shape of at least some of the components as described herein can be varied to accommodate portable electronic devices of various shapes and sizes.

At least some of the above concepts, and variations thereof, may realize one or more benefits. For example, many electronic portable devices, such as those mentioned herein (e.g., mobile phones, smart phones, personal digital assistants, tablet computers, etc.) are normally quite small and are sized and shaped to be held in one or more human hands. For such small electronic portable devices, using fuel cells may present challenges that are different in magnitude and kind from those faced by larger fuel-cell-powered devices (e.g. industrial sized fuel cells or fuel cells used in automobiles or other vehicles).

For example, some concepts as described herein may assist with miniaturization or space-saving demands (or both) that are applicable to handheld electronic portable devices.

Furthermore, some concepts as described herein may have the potential to support systems for supplying energy consistent with the needs of handheld electronic portable devices during ordinary operation (e.g. sending and receiving electronic messages, voice communication, consuming media content such as music and videos, etc.) while still operating within the constraints of a portable electronic device (e.g. temperature requirements, etc).

Furthermore, some concepts as described herein may cooperate with a number of other power-related technologies. For example, some concepts described herein may help enable an electronic portable device to be powered by a plurality of energy storing elements, such as one or more fuel cells, batteries, supercapacitors, and other energy storage devices.

Some concepts as described herein may also be adapted to work in concert with a variety of shapes, sizes and configurations of small handheld electronic portable devices.

Some embodiments as described herein may result in reduced cost, as certain elements of an electronic portable device may perform multiple functions. In particular, the frame may provide structural integrity and aesthetic appeal as well as fuel storage and serving as a fuel cell for powering at least some of the electronic components of the portable electronic device, for example.

The foregoing aspects of the fuel tank are provided for exemplary purposes only. Those skilled in the art will recognize that various changes in form, material used and design may be made thereto without departing from the electronic portable device as defined by the appended claims.

## Claims

1. An electronic portable device comprising:
at least one electronic component (212);
a fuel cell (220) operable to power at least in part the at least one electronic component (212); and
a fuel tank (200, 201) adapted to store fuel to be used by the fuel cell (220);
wherein the fuel tank (200, 201) is defined by at least one body section (202A, 202B), the at least one body section (202A, 202B) sized and shaped so as to form a frame (203) of the electronic device, the frame (203) having at least one hollow region (205) adapted to store the fuel therein, the at least one body section (202A, 202B) including an inlet (204) adapted to introduce fuel into the hollow region (205) and an outlet (206) adapted to release fuel from the hollow region (205) to the fuel cell (220),
**characterised in that** the fuel cell (220) is located within the frame (203) of the electronic portable device.

2. The electronic portable device of claim 1, wherein the at least one body section (202A, 202B) includes at least two body sections (202A, 202B) operable to be coupled together to define the body.

3. The electronic portable device of claim 1, wherein the body is formed as a unitary body (202).

4. The electronic portable device of any preceding claim, further comprising a fuel channel that connects the outlet (206) of the fuel tank (200, 201) to the fuel cell (220).

5. The electronic portable device of any preceding claim, wherein the inlet (204) is adapted to connect to a fueling dock.

## Patentansprüche

1. Eine elektronische tragbare Vorrichtung, die aufweist:
zumindest eine elektronische Komponente (212);
eine Brennstoffzelle (220), die betriebsfähig ist, zumindest teilweise die zumindest eine elektronische Komponente (212) mit Energie zu versorgen; und
einen Brennstofftank (200, 201), der ausgebildet ist zum Aufnehmen von Brennstoff zur Verwendung durch die Brennstoffzelle (220);
wobei der Brennstofftank (200, 201) definiert ist durch zumindest einen Körperabschnitt (202A, 202B), wobei der zumindest eine Körperabschnitt (202A, 202B) eine Größe hat und geformt ist, um einen Rahmen (203) der elektronischen Vorrichtung zu bilden, wobei der Rahmen (203) zumindest einen hohlen Bereich (205) hat, der ausgebildet ist, den Brennstoff darin aufzunehmen, wobei der zumindest eine Körperabschnitt (202A, 202B) einen Einlass (204) umfasst, der ausgebildet ist, Brennstoff in den hohlen Bereich (205) einzuführen, und einen Auslass (206), der ausgebildet ist, Brennstoff aus dem hohlen Bereich (205) an die Brennstoffzelle (220) abzugeben,
**dadurch gekennzeichnet, dass** sich die Brennstoffzelle (220) in dem Rahmen (203) der elektronischen tragbaren Vorrichtung befindet.

2. Die elektronische tragbare Vorrichtung gemäß Anspruch 1, wobei der zumindest eine Körperabschnitt (202A, 202B) zumindest zwei Körperabschnitte (202A, 202B) umfasst, die betriebsfähig sind, miteinander verbunden zu werden, um den Körper zu definieren.

3. Die elektronische tragbare Vorrichtung gemäß Anspruch 1, wobei der Körper als ein einstückiger Körper (202) ausgebildet ist.

4. Die elektronische tragbare Vorrichtung gemäß einem vorhergehenden Anspruch, die weiter einen Brennstoffkanal aufweist, der den Auslass (206) des Brennstofftanks (200, 201) mit der Brennstoffzelle (220) verbindet.

5. Die elektronische tragbare Vorrichtung gemäß einem vorhergehenden Anspruch, wobei der Einlass (204) ausgebildet ist zur Verbindung mit einer Einfüllstation.

## Revendications

1. Dispositif électronique portable comprenant :
au moins un composant électronique (212) ;
une pile à combustible (220) servant à alimenter, au moins en partie, ledit au moins un composant électronique (212) ; et
un réservoir à combustible (200, 201) apte à stocker le combustible devant être utilisé par la pile à combustible (220) ;
le réservoir à combustible (200, 201) étant défini par au moins une section de corps (202A, 202B), l'au moins une section de corps (202A, 202B) étant dimensionnée et conformée de manière à former un châssis (203) du dispositif électronique, 1 le châssis (203) comportant au moins une région creuse (205) apte à stocker le combustible en son sein, l'au moins une section de corps (202A, 202B) comprenant une entrée (204) conçue pour l'introduction de combustible dans la région creuse (205) et une sortie (206) conçue pour la libération de combustible depuis la région creuse (205) jusqu'à la pile à combustible (220),
**caractérisé en ce que** la pile à combustible (220) se trouve au sein du châssis (203) du dispositif électronique portable.

2. Dispositif électronique portable selon la revendication 1, dans lequel l'au moins une section de corps (202A, 202B) comprend au moins deux sections de corps (202A, 202B) aptes à être accouplées l'une à l'autre pour définir le corps.

3. Dispositif électronique portable selon la revendication 1, dans lequel le corps est formé en tant que corps d'un seul tenant (202).

4. Dispositif électronique portable selon l'une quelconque des revendications précédentes, comprenant, en outre, un canal à combustible qui relie la sortie (206) du réservoir à combustible (200, 201) à la pile à combustible (220).

5. Dispositif électronique portable selon l'une quelconque des revendications précédentes, dans lequel l'entrée (204) est apte à une connexion à une station de ravitaillement en combustible.
